# EUROPEAN PATENT SPECIFICATION

(11) **EP 2 852 020 B1**
(45) Date of publication and mention of the grant of the patent: **04.12.2019**
(21) Application number: 13185149.5
(22) Date of filing: 19.09.2013
(51) Int. Cl.: H02J 4/00

(54) **Power distribution architecture and aircraft comprising power distribution architecture**
Energieverteilungsarchitektur und Flugzeug mit der Energieverteilungsarchitektur
Architecture de distribution d'énergie et aéronef comportant une architecture de distribution d'énergie

(43) Date of publication of application: 25.03.2015
(73) Proprietor: Airbus Operations GmbH, 21129 Hamburg (DE)
(72) Inventor: Johannsen, Martin, 22889 Tangstedt (DE)
(74) Representative: Isarpatent

(56) References cited:
- EP-A1- 1 914 162
- EP-A2- 2 230 743
- EP-A2- 2 388 881

## Description

The present invention relates to a power distribution architecture and an aircraft comprising a power distribution architecture, in particular for the power distribution among cabin and cargo loads in an aircraft.

Modern aircraft power distribution architectures usually employ solid state power controller (SSPC) devices. The underlying principle for a SSPC is based upon one or more semiconductor switching devices coupled in series with a sensing device for detecting the switch current. Depending on the detected switch current by the sensing device, a control unit is configured to implement guarding functions for the switching devices in case of a failure in any of the components of the SSPC device.

Such SSPC devices are usually employed in so-called secondary power distribution boxes (SPDBs) of aircraft which provide cabin and cargo loads of the aircraft with electrical power. In order to ensure operation safety of the aircraft the power supply lines are commonly additionally protected by so-called remote controlled circuit breakers (RCCBs) which are implemented in the power supply lines between the power supply and the SPDBs and which protect the loads against overloading in the case of insulation or equipment faults.

Supply lines are usually designed with a specific load capacity so that after exceeding the maximum load capacity the respective RCCBs and SSPCs will trip and cause the power supply for the respective power supply line to be shut down. Depending on the type of aircraft, multiple cabin and cargo loads will have to be supplied with power. A trade-off has usually to be made between the number of separately protected power supply lines and the number of loads commonly supplied by a single supply line. The usage of loads in an aircraft may vary a lot, particularly depending on the flight phase, the time of the day, the types of loads and similar circumstances. Thus, load management in an aircraft is a daunting task.

The document WO 2010/037934 A2 discloses methods and systems for supplying and distributing electrical power of several sources on a power network while ensuring the continuity of power supply in the case of a failure or interruption of one of the sources. Document EP 1 914 162 A1 discloses a service distribution system with a zonal power distribution subsystem that includes a zonal power supply unit for supplying power to at least one electrical load and a zonal energy store connected to a switchboard of the service distribution system for supplying power to the zonal power supply unit. However, there is still a need for solutions which optimizes load management of electrical loads and of power supply lines with as little additional hardware and safety-relevant components as possible.

This object is achieved by a power distribution architecture having the features of claim 1, and by an aircraft having the features of claim 2.

A first aspect of the invention is directed to a power distribution architecture, comprising at least one power distribution box including at least two solid state power controllers, SSPCs, at least two main power supply lines, each of the main power supply lines being coupled to one of the respective SSPCs and being configured to supply power to the respective one of the SSPCs, at least two main remote controlled circuit breakers, RCCBs, each of the at least two main RCCBs being coupled to one of the respective main power supply lines for shutting down one of the respective main power supply lines after exceeding maximum load capacity, and at least one balancing RCCB coupled in a power balancing path connected between two of the main power supply lines wherein the at least two SSPCs provide electrical power from a power supply to at least one electrical load and wherein in an event of failure, defect or overload in one of the electrical loads the SSPCs are configured to shed loads which may lead to an overload of the remaining main power supply lines while a remaining electrical load may continue to operate.

A second aspect of the invention is directed to an aircraft, comprising a power distribution architecture according to the first aspect of the invention.

The idea on which the present invention is based is to combine the advantages of power supply line separation for loads or load groups with selective interconnectivity between separate power supply lines via protection elements in load balancing paths.

Advantageously, this achieves power supply line redundancy for different loads or load groups so that the peak load is increased. Thus, loads may be more flexibly associated with load groups while keeping the number of overall load groups larger. In the event of failure, defect or overload in one of the loads or load groups the remaining load groups may continue to operate.

More importantly, this effect is achieved without significant additional wiring requirements which lead to less space taken up and less weight being generated by the power distribution architecture. Weight saving is particularly advantageous for applications in aviation and avionics.

Furthermore, the parallel power supply line topology with security enhanced interconnection lines allows for the selective shutdown of specific power supply lines and their associated load groups, respectively.

This is especially advantageous for separating safety-critical and non-safety-critical loads like flight entertainment systems or ground supply loads on one hand and fire protections systems or emergency lighting systems on the other.

According to an embodiment of the power distribution architecture, the power distribution architecture may further comprise a power supply coupled to the at least two main power supply lines and configured to provide power to the SSPCs.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
- Fig. 1: schematically illustrates an aircraft including a power distribution architecture according to an embodiment of the invention.
- Fig. 2: schematically illustrates a power distribution architecture for an aircraft according to a further embodiment of the invention.
- Fig. 3: schematically illustrates a further power distribution architecture for an aircraft according to a further embodiment of the invention.

In the figures, like reference numerals denote like or functionally like components, unless indicated otherwise. Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

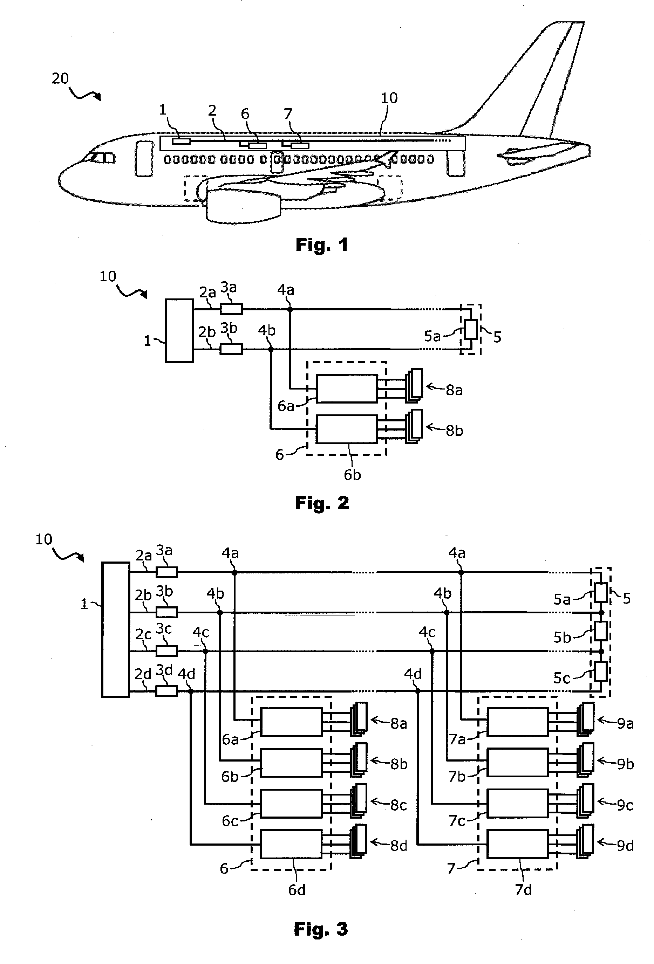

Fig. 1 shows a schematic illustration of an aircraft 20 comprising a power distribution architecture 10 on board of the aircraft. The power distribution architecture 10 may in particular be used to distribute power from an on-board power supply 1 of the aircraft 20 to power distribution boxes 6 and 7 which are arranged in the aircraft 20. The power supply 1 may for example comprise a power source, for example a generator, a fuel cell or a high voltage battery. The power supply 1 may feed the power distribution boxes 6 and 7 via one or more power supply lines 2. The power distribution boxes 6 and 7 in turn may provide the supplied power to attached loads in the aircraft 20, for example cabin and cargo loads like in-flight entertainment systems, cabin lighting, galley, sanitary modules, electronic security systems or the like. The power supply line(s) 2 may for example run from the front of the aircraft 20 where a power supply 1 is typically located towards the back of the aircraft 20. The power distribution boxes 6 and 7 may be provided at convenient locations along the longitudinal extension of the aircraft 20, depending on where loads are located in the aircraft 20 that need to be supplied with electrical power.

Fig. 2 shows an exemplary illustration of a power distribution architecture 10, for example for use in an aircraft 20 as exemplarily shown in conjunction with Fig. 1. The power distribution architecture 10 includes a power supply 1 which is coupled to a power distribution box 6 which may for example be a secondary power distribution box (SPDB) of an aircraft. The power supply 1 may be coupled to two main power supply lines 2a, 2b which are configured to provide power to SSPCs or SSPC groups 6a, 6b which are in turn included in the power distribution box 6.

Each of the power supply lines 2a and 2b may be coupled to a respective SSPC or SSPC group 6a or 6b, respectively, i.e. the SSPCs or SSPC groups 6a and 6b are electrically separate from each other and the power supply of each of the SSPCs or SSPC groups 6a and 6b is secured via a corresponding one of the main power supply lines 2a and 2b, respectively.

In each of the main power supply lines 2a and 2b a remote controlled circuit breaker (RCCB) 3a and 3b is coupled in the current path between the power supply 1 and the power distribution box 6. Between at least two of the main power supply lines 2a and 2b a balancing remote controlled circuit breaker, RCCB, 5a may be coupled in a power balancing path 5 connected between the two main power supply lines 2a and 2b. Since the power supply lines 2a and 2b are commonly running approximately along the whole length of an aircraft with the power supply 1 being connected at the end of the aircraft's nose, the power balancing path 5 may advantageously be provided at the opposite end near the rear of the aircraft.

Each of the SSPCs or SSPCs groups 6a and 6b may couple the power supply 1 with loads or load groups 8a and 8b, respectively. The SSPCs 6a and 6b may for example be hardware components including one or more controllable circuit breaking components which have to be enabled for the SSPC device to provide power from the power supply 1 to a particular one of the electrical loads 8a or 8b. The SSPCs 6a, 6b may be under control of a controlling unit that monitors the operational state of the elements of the SSPCs 6a, 6b. In particular, when any failure, defect or irregularity is detected that might lead to potential overloads or other harm to the associated electrical components of the power distribution architecture 10 the controlling unit is able to take measures to shut down the power supply 1 and/or the SSPCs 6a, 6b for safety reasons. Usually, the required failure rates and failure response times are bounded by upper limits set by official regulations of aviation associations.

The power supply 1 may for example be a generator, a fuel cell or a high voltage battery or accumulator, and may supply an input AC or DC voltage to the power distribution architecture 10. In the power distribution architecture 10 of Fig. 2 the main power supply lines 2a, 2b, also called feeders, may be operated in parallel during normal operational conditions. The loads or load groups 8a and 8b are thus operated in parallel as well, just as the RCCBs 6a, 6b. This means that the current availability for each of the loads or load groups 8a and 8b is doubled by virtue of the power balancing path 5.

The additional RCCB 5a is used to protect the wiring in the case of a failure, defect or overload. An overload would isolate the respective main power supply line 5 due to first the additional RCCB 5a opening and in short succession the respective main RCCB 3a or 3b. After such an overload event the power distribution box 6 is configured to shed all loads which may lead to an overload of the remaining main power supply lines 2a or 2b, while the remaining loads or load groups 8a and 8b remain operable.

Fig. 3 schematically shows a power distribution architecture 10 which mainly differs for the power distribution architecture 10 in Fig. 2 in that four main power supply lines 2a, 2b, 2c, 2d are employed with main RCCBs 3a, 3b, 3c and 3d. Each of the main power supply lines 2a, 2b, 2c, 2d branches of at respective distribution nodes 4a, 4b, 4c, 4d to two power distribution boxes 6 and 7 with respective SSPCs or SSPCs groups 6a, 6b, 6c, 6d and 7a, 7b, 7c, 7d. The SSPCs 6a to 6d and 7a to 7d are configured to supply loads or load groups 8a to 8d and 9a to 9d, respectively, in each case.

All main power supply lines 2a, 2b, 2c, 2d are interconnected at a common neutral point. The interconnection lines to the common neutral point may be power balancing paths 5 as well with additional RCCBs 5a, 5b and 5c - one for each interconnection between two main power supply lines 2a, 2b, 2c, 2d - coupled between the neutral point and the distribution nodes 4a, 4b, 4c, 4d. It may also be possible to provide power balancing paths between the distribution nodes 4a, 4b, 4c, 4d for two of the power distribution boxes 6, 7 as well.

It may also be possible to provide a respective additional RCCB 5a, 5b, 5c in each of the main power supply lines 2a, 2b, 2c, 2d, i.e. four additional RCCBs in the architecture shown in Fig. 2, and to interconnect the main power supply lines 2a, 2b, 2c, 2d with direct connections. This may prove advantageous in terms of ease of installation and RCCB placement.

The number of power distribution boxes 6, 7 is exemplarily shown as two in Fig. 3, however, any other number of power distribution boxes may be possible as well. Similarly, the number of main power supply lines or feeders 2a to 2d is exemplarily shown as four in Fig. 3, however, any other number of main power supply lines being coupled in parallel may be possible as well.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

### List of reference numerals and signs

- 1: Power supply
- 2: Main power supply bus
- 2a: Main power supply line
- 2b: Main power supply line
- 2c: Main power supply line
- 2d: Main power supply line
- 3a: Main remote controlled circuit breaker
- 3b: Main remote controlled circuit breaker
- 3c: Main remote controlled circuit breaker
- 3d: Main remote controlled circuit breaker
- 4a: Distribution node
- 4b: Distribution node
- 4c: Distribution node
- 4d: Distribution node
- 5: Power balancing path
- 5a: Balancing remote controlled circuit breaker
- 5b: Balancing remote controlled circuit breaker
- 5c: Balancing remote controlled circuit breaker
- 6: Power distribution box
- 6a: Solid state power controller
- 6b: Solid state power controller
- 6c: Solid state power controller
- 6d: Solid state power controller
- 7: Power distribution box
- 7a: Solid state power controller
- 7b: Solid state power controller
- 7c: Solid state power controller
- 7d: Solid state power controller
- 8a: Load group
- 8b: Load group
- 8c: Load group
- 8d: Load group
- 9a: Load group
- 9b: Load group
- 9c: Load group
- 9d: Load group
- 10: Power distribution architecture
- 20: Aircraft

## Claims

1. Power distribution architecture (10), comprising:
a power supply (1);
at least one power distribution box (6; 7), wherein each power distribution box (6; 7) includes at least two Solid State Power Controllers SSPCs (6a, 6b, 6c, 6d; 7a, 7b, 7c, 7d);
at least two main power supply lines (2a, 2b, 2c, 2d), wherein the power supply (1) is coupled to the at least two main power supply lines (2a, 2b, 2c, 2d) and configured to provide power to the SSPCs (6a, 6b, 6c, 6d; 7a, 7b, 7c, 7d), each of the main power supply lines (2a, 2b, 2c, 2d) being coupled to one of the respective SSPCs (6a, 6b, 6c, 6d; 7a, 7b, 7c, 7d) and being configured to supply power to the respective one of the SSPCs (6a, 6b, 6c, 6d; 7a, 7b, 7c, 7d), wherein only one of the main power supply lines (2a, 2b, 2c, 2d) is coupled to the respective SSPC (6a, 6b, 6c, 6d; 7a, 7b, 7c, 7d);
at least two main Remote Controlled Circuit Breakers RCCBs (3a, 3b, 3c, 3d), each of the at least two main RCCBs (3a, 3b, 3c, 3d) being coupled to one of the respective main power supply lines (2a, 2b, 2c, 2d) for shutting down one of the respective main power supply lines (2a, 2b, 2c, 2d) after exceeding maximum load capacity; and
at least one balancing remote controlled circuit breaker, RCCB (5a, 5b, 5c), coupled in a power balancing path (5) connected between two of the main power supply lines (2a, 2b, 2c, 2d), wherein all main power supply lines (2a, 2b, 2c, 2d) are interconnected at a common neutral point with interconnection lines to the common neutral point and wherein each interconnection line comprises a balancing remote controlled circuit breaker, RCCB (5a, 5b, 5c), and wherein each of the main power supply lines (2a, 2b, 2c, 2d) branches at respective distribution nodes (4a, 4b, 4c, 4d) to the power distribution box (6; 7) and the at least one balancing remote controlled circuit breaker, RCCB (5a, 5b, 5c), is coupled between the neutral point and the respective distribution nodes (4a, 4b, 4c, 4d);
wherein the at least two SSPCs (6a, 6b, 6c, 6d; 7a, 7b, 7c, 7d) provide electrical power from a power supply (1) to at least one electrical load (8a, 8b, 8c, 8d; 9a, 9b, 9c, 9d) and
wherein in an event of failure, defect or overload in one of the electrical loads (8a, 8b, 8c, 8d; 9a, 9b, 9c, 9d) the SSPCs (6a, 6b, 6c, 6d; 7a, 7b, 7c, 7d) are configured to shed loads which may lead to an overload of the remaining main power supply lines while a remaining electrical load (8a, 8b, 8c, 8d; 9a, 9b, 9c, 9d) may continue to operate.

2. Aircraft, comprising a power distribution architecture (10) of claim 1.

## Patentansprüche

1. Energieverteilungsarchitektur (10), umfassend:
eine Energieversorgung (1);
mindestens einen Energieverteilerkasten (6; 7), wobei jeder Energieverteilerkasten (6; 7) mindestens zwei "Solid State Power Controller", SSPCs, (6a, 6b, 6c, 6d; 7a, 7b, 7c, 7d) beinhaltet;
mindestens zwei Hauptenergieversorgungsleitungen (2a, 2b, 2c, 2d), wobei die Energieversorgung (1) mit den mindestens zwei Hauptenergieversorgungsleitungen (2a, 2b, 2c, 2d) gekoppelt und dazu ausgelegt ist, die SSPCs (6a, 6b, 6c, 6d; 7a, 7b, 7c, 7d) mit Energie zu versorgen, wobei jede der Hauptenergieversorgungsleitungen (2a, 2b, 2c, 2d) mit einem der jeweiligen SSPCs (6a, 6b, 6c, 6d; 7a, 7b, 7c, 7d) verbunden ist und dazu ausgelegt ist, den jeweiligen der SSPCs (6a, 6b, 6c, 6d; 7a, 7b, 7c, 7d) mit Energie zu versorgen, wobei nur eine der Hauptenergieversorgungsleitungen (2a, 2b, 2c, 2d) mit dem jeweiligen SSPC (6a, 6b, 6c, 6d; 7a, 7b, 7c, 7d) gekoppelt ist;
mindestens zwei ferngesteuerte Haupt-Leistungsschalter ("Remote Controlled Circuit Breakers"), RCCBs, (3a, 3b, 3c, 3d), wobei jeder der mindestens zwei Haupt-RCCBs (3a, 3b, 3c, 3d) mit einer der jeweiligen Hauptenergieversorgungsleitungen (2a, 2b, 2c, 2d) gekoppelt ist, um eine der jeweiligen Hauptenergieversorgungsleitungen (2a, 2b, 2c, 2d) nach Überschreiten der maximalen Lastkapazität abzuschalten; und
mindestens einen ausgleichenden ferngesteuerten Leistungsschalter, RCCB (5a, 5b, 5c), der in einem Energieausgleichspfad (5) gekoppelt ist, der zwischen zwei der Hauptenergieversorgungsleitungen (2a, 2b, 2c, 2d) geschaltet ist, wobei alle Hauptenergieversorgungsleitungen (2a, 2b, 2c, 2d) an einem gemeinsamen Nullpunkt mit Verbindungsleitungen zum gemeinsamen Nullpunkt verbunden sind, und wobei jede Verbindungsleitung einen ausgleichenden ferngesteuerten Leistungsschalter, RCCB (5a, 5b, 5c) umfasst, und
wobei jede der Hauptenergieversorgungsleitungen (2a, 2b, 2c, 2d) an jeweiligen Verteilknoten (4a, 4b, 4c, 4d) zum Energieverteilerkasten (6; 7) abzweigt, und der mindestens eine ausgleichende ferngesteuerte Leistungsschalter, RCCB, (5a, 5b, 5c) zwischen dem Nullpunkt und den jeweiligen Verteilknoten (4a, 4b, 4c, 4d) geschaltet ist;
wobei die mindestens zwei SSPCs (6a, 6b, 6c, 6d; 7a, 7b, 7c, 7d) elektrische Energie von einer Energieversorgung (1) an mindestens eine elektrische Last (8a, 8b, 8c, 8d; 9a, 9b, 9c, 9d) liefern; und
wobei im Falle eines Ausfalls, Defekts oder einer Überlastung einer der elektrischen Lasten (8a, 8b, 8c, 8d; 9a, 9b, 9c, 9d) die SSPCs (6a, 6b, 6c, 6d; 7a, 7b, 7c, 7d) dazu ausgelegt sind, Lasten abzuwerfen, die zu einer Überlastung der verbleibenden Hauptenergieversorgungsleitungen führen können, während eine verbleibende elektrische Last (8a, 8b, 8c, 8d; 9a, 9b, 9c, 9d) weiter betrieben werden kann.

2. Luftfahrzeug, umfassend eine Energieverteilungsarchitektur (10) nach Anspruch 1.

## Revendications

1. Architecture de distribution d'énergie (10), comprenant :
une alimentation (1) ;
au moins une boîte de distribution d'énergie (6 ; 7), chaque boîte de distribution d'énergie (6 ; 7) comprenant au moins deux contrôleurs d'énergie à semiconducteurs, SSPC, (6a, 6b, 6c, 6d ; 7a, 7b, 7c, 7d) ;
au moins deux lignes d'alimentation principales (2a, 2b, 2c, 2d), l'alimentation (1) étant couplée aux au moins deux lignes d'alimentation principales (2a, 2b, 2c, 2d) et configurée pour alimenter les SSPC (6a, 6b, 6c, 6d ; 7a, 7b, 7c, 7d), chacune des lignes d'alimentation principales (2a, 2b, 2c, 2d) étant couplée à un des SSPC (6a, 6b, 6c, 6d ; 7a, 7b, 7c, 7d) respectifs et étant configurée pour alimenter le SSPC respectif des SSPC (6a, 6b, 6c, 6d ; 7a, 7b, 7c, 7d), une seule des lignes d'alimentation principales (2a, 2b, 2c, 2d) étant couplée au SSPC (6a, 6b, 6c, 6d ; 7a, 7b, 7c, 7d) respectif ;
au moins deux disjoncteurs télécommandés, RCCB, principaux (3a, 3b, 3c, 3d), chacun des au moins deux RCCB principaux (3a, 3b, 3c, 3d) étant couplé à une des lignes d'alimentation principales (2a, 2b, 2c, 2d) respectives pour mettre hors tension une des lignes d'alimentation principales (2a, 2b, 2c, 2d) respectives après le dépassement d'une capacité de charge maximale ; et
au moins un disjoncteur télécommandé, RCCB, (5a, 5b, 5c) d'équilibrage, couplé dans une voie d'équilibrage d'énergie (5) connectée entre deux des lignes d'alimentation principales (2a, 2b, 2c, 2d), toutes les lignes d'alimentation principales (2a, 2b, 2c, 2d) étant interconnectées au niveau d'un point neutre commun avec des lignes d'interconnexion au point neutre commun, et chaque ligne d'interconnexion comprenant un disjoncteur télécommandé, RCCB, (5a, 5b, 5c) d'équilibrage, et chacune des lignes d'alimentation principales (2a, 2b, 2c, 2d) se branchant au niveau de nœuds de distribution (4a, 4b, 4c, 4d) respectifs à la boîte de distribution d'énergie (6 ; 7), et l'au moins un disjoncteur télécommandé, RCCB, (5a, 5b, 5c) d'équilibrage étant couplé entre le point neutre et les nœuds de distribution (4a, 4b, 4c, 4d) respectifs ;
les au moins deux SSPC (6a, 6b, 6c, 6d ; 7a, 7b, 7c, 7d) fournissant de l'énergie électrique d'une alimentation (1) à au moins une charge électrique (8a, 8b, 8c, 8d ; 9a, 9b, 9c, 9d), et
en cas de panne, de défaut ou de surcharge dans une des charges électriques (8a, 8b, 8c, 8d ; 9a, 9b, 9c, 9d), les SSPC (6a, 6b, 6c, 6d ; 7a, 7b, 7c, 7d) étant configurés pour se délester de charges qui peuvent conduire à une surcharge des lignes d'alimentation principales restantes pendant qu'une charge électrique (8a, 8b, 8c, 8d ; 9a, 9b, 9c, 9d) restante peut continuer de fonctionner.

2. Aéronef, comprenant une architecture de distribution d'énergie (10) selon la revendication 1.
